# EUROPÄISCHE PATENTSCHRIFT

(11) **EP 3 887 785 B1**
(45) Veröffentlichungstag und Bekanntmachung des Hinweises auf die Patenterteilung: **26.07.2023**
(21) Anmeldenummer: 19809834.5
(22) Anmeldetag: 27.11.2019
(51) Int. Cl.: G01K 17/10, G01F 1/696, G01F 1/74

(54) **VERFAHREN ZUM BETRIEB EINES WÄRMEMENGENZÄHLERS**
METHOD FOR OPERATING A HEAT METER
PROCÉDÉ DE FONCTIONNEMENT D'UN COMPTEUR CALORIMÉTRIQUE

(30) Priorität: 28.11.2018 DE 102018130194
(43) Veröffentlichungstag der Anmeldung: 06.10.2021
(73) Patentinhaber: Simplex Armaturen & Systeme GmbH, 88260 Argenbühl (DE)
(72) Erfinder: HOESSEL, Hendrik, 88316 Isny (DE); LAUTERLEN, Alexander Thomas, 88179 Oberreute (DE)
(74) Vertreter: Otten, Roth, Dobler & Partner mbB Patentanwälte
(86) Internationale Anmeldenummer: PCT/EP2019/082763
(87) Internationale Veröffentlichungsnummer: WO 2020/109397

(56) Entgegenhaltungen:
- EP-A1- 0 210 509
- DE-A1-102007 015 609
- US-B1- 7 775 706

## Beschreibung

Die Erfindung betrifft ein Verfahren zum Betrieb eines Wärmemengenzählers gemäß dem Oberbegriff des Anspruchs 1.

Aus dem Stand der Technik sind Wärmemengenzähler bekannt, mittels derer Wärmemengen erfasst werden, welche von einem Medium transportiert werden.

Aus der DE 10 2007 015 609 A1 ist ein Kälte- oder Wärmezählereinrichtung zur Ermittlung des Energieverbrauchs in einem Temperierungs-Kreislauf bekannt, wobei in diesem ein Gemisch aus wenigstens zwei Flüssigkeiten, insbesondere ein Wasser-Glykol-Gemisch zirkuliert, wobei die Kälte- oder Wärmezählereinrichtung eine Messvorrichtung zur Ermittlung des Gemischdurchflusses und einer Temperaturdifferenz zwischen dem Vorlauf und dem Rücklauf des Gemischs umfasst, welche die Messvorrichtung unter Berücksichtigung des Durchflusses und der Temperaturdifferenz den Energieverbrauch ermittelt.

Aus der US 7 775 706 B1 ist es bekannt die spezifische Wärme eines Arbeitsmediums während des Betriebs eines Heizsystems zu messen und den aktuell gemessenen Wert bei der Berechnung der übertragenen Wärme zu verwenden, wobei die Echtzeitmessung der spezifischen Wärme unter Verwendung eines spezifischen Wärmesensors durchgeführt werden kann, der entweder ein Widerstandsheizelement oder ein thermoelektrisches Modul aufweist.

Aus der EP 0 210 509 A1 ist ein Verfahren zum Messen der Eigenschaften eines Fluids, insbesondere der Art, der Zusammensetzung, der Strömungsgeschwindigkeit bzw. des Massenstromes oder des Niveaus eines Fluids unter Verwendung eines mit dem Fluid in Wärmekontakt stehenden, von elektrischem Strom durchflossenen Sensorelementes mit temperaturabhängigem elektrischem Widerstand bekannt, wobei das Sensorelement während eines ersten vorbestimmten und begrenzten Zeitintervalls, der Heizphase, mit vorbestimmter elektrischer Leistung aufgeheizt, wobei das Sensorelement während eines sich anschließenden, vorbestimmten und begrenzten Zeitintervalls, der Kühlphase, abgekühlt wird und wobei die Widerstandsänderung des Sensorelementes mindestens während einer der beiden Phasen gemessen wird.

Es ist Aufgabe der Erfindung, ein Verfahren zum Betrieb eines Wärmemengenzählers vorzuschlagen, durch welches ein Zusatznutzen oder ein Alternativnutzen verfügbar wird.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Im Sinne der Erfindung wird unter einem CTA-Sensor ein Durchflusssensor verstanden, welcher nach dem Prinzip der "Constant Temperature Anemometry" betrieben wird und hierzu eine Messsonde umfasst, welche in ein Medium geführt ist. Die Messsonde wird sequentiell angesteuert, d.h. in einer Sequenz wird die Medientemperatur durch Anlegen einer geringen Heizleistung am Platin-Messwiderstand bestimmt und in einer weiteren Sequenz wird eine bestimmte Heizleistung am Platin-Messwiderstand angelegt. Die dadurch entstehende Wärme am Messwiderstand wird von der vorherrschenden Medienströmung abgetragen und gibt somit Aufschluss über die Strömungsgeschwindigkeit. Die Strömungsgeschwindigkeit wird
- entweder durch Anlegen einer definierten Heizleistung und durch Messung der Widerstandsänderung zwischen Temperaturbestimmungsphase und Heizphase bestimmt
- oder wird durch Anlegen einer geregelten Übertemperatur am Sensor (z.B. 10 K über Medientemperatur) und durch Messung der Heizleistung, welche erforderlich ist um diese Übertemperatur zu erreichen, bestimmt.

Aus der Strömungsgeschwindigkeit und der bekannten geometrischen Form des Sensorgehäuses kann dann der Volumenstrom berechnet werden. Der CTA-Sensor bestimmt die Werte Temperatur und Durchfluss sequentiell. Für eine Permanent-Messung von Temperatur und Durchfluss kommen zwei CTA-Sensoren in Reihenschaltung zum Einsatz. Es ist auch vorgesehen, aus den gemessenen Werten den Wärmestrom bzw. Energieverbrauch zu berechnen.

Weitere Einzelheiten der Erfindung werden in der Zeichnung anhand von schematisch dargestellten Ausführungsbeispielen beschrieben.

Hierbei zeigt:
- Figur 1:: eine schematische Darstellung eines Wärmemengenzählers und
- Figur 2:: einen Verlauf eines Widerstandswerts des Messwiderstandes bei der Durchführung des erfindungsgemäßen Verfahrens zur Bestimmung bzw. Kontrolle der Zusammensetzung des Mediums.

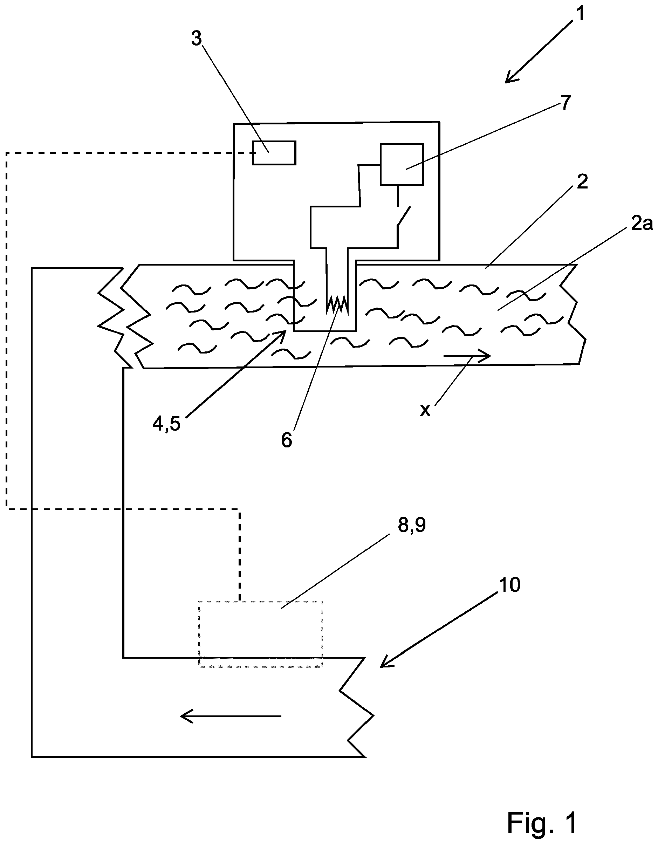

In der Figur 1 ist ein Wärmemengenzähler 1 in schematischer Darstellung gezeigt. Dieser umfasst einen Leitungsabschnitt 2, eine Prozessoreinheit 3 und einen in einem Innenraum 2a des Leitungsabschnitts 2 reichenden Sensor 4. Mittels des Sensors 4 ist eine Temperatur eines Mediums M und eine Strömungsgeschwindigkeit, mit welcher das Medium M den Leitungsabschnitt 2 durchströmt, messbar. Der Sensor 4 ist als CTA-Sensor 5 ausgebildet und umfasst einen in dem Leitungsabschnitt 2 von dem Medium M umströmten Messwiderstand 6. Weiterhin umfasst der Wärmemengenzähler 1 eine Energieversorgungseinrichtung 7, an welche der Messwiderstand 6 derart angeschlossen ist, das dem Messwiderstand 6 in einem Aufheizbetrieb von der Energieversorgungseinrichtung 7 mit elektrischem Strom versorgt ist und erwärmt wird.

Der Wärmemengenzähler 1 kann wahlweise in einem Messbetrieb zur Messung eines von dem Medium M transportierten Wärmestroms betrieben werden oder in einem Analysebetrieb zur Bestimmung einer Zusammensetzung des Mediums M betrieben werden. In dem Messbetrieb ruht das Medium M entweder in dem Innenraum 2a oder das Medium M durchfließt den Innenraum 2a in eine Strömungsrichtung x. Der Wärmemengenzähler 1 ist an einen nicht dargestellten Heizungs- und/oder Kühlkreislauf angeschlossen. Alternativ kann der Leitungsabschnitt auch durch den nicht dargestellten Heizungs- und/oder Kühlkreislauf gebildet sein. In diesem Falle ist der Wärmemengenzähler dann mit seinem Sensor in einen Bohrung eingesteckt, so dass der Sensor in dem Medium ruht.

In dem Messbetrieb zur Messung des von dem Medium M transportierten Wärmestroms wird von dem CTA-Sensor 5 wiederholt sequentiell die Temperatur des Mediums M gemessen wird und die Strömungsgeschwindigkeit gemessen, mit welcher das Medium M den Leitungsabschnitt 2 durchströmt. Aus den Messwerten wird dann in der Prozessoreinheit 3 oder alternativ in einer nicht dargestellten Heizungssteuerung der Wärmestrom errechnet.

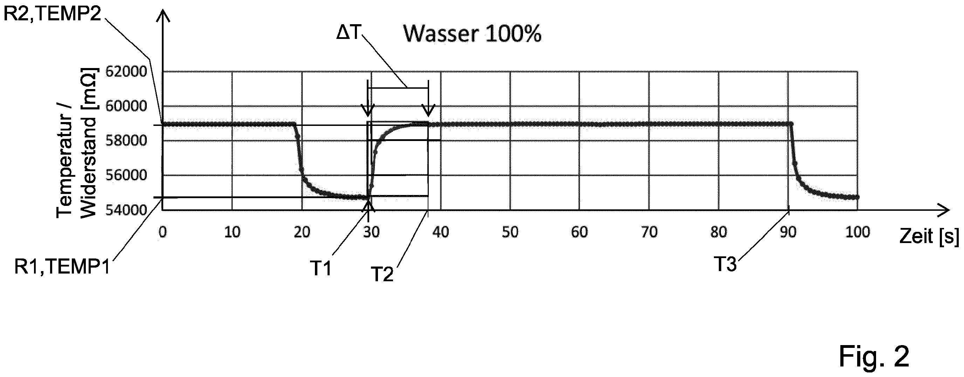

In der Figur 2 ist ein Verlauf des Widerstandswerts des Messwiderstandes 6 (siehe Figur 1) bei der Durchführung des Verfahrens zur Analyse bzw. Bestimmung und/oder Kontrolle der Zusammensetzung des Mediums M grafisch dargestellt.

In dem Analysebetrieb zur Bestimmung der Zusammensetzung des Mediums M werden die nachfolgend genannten Schritte durchgeführt:
- es wird ein erster Widerstandswert R1 des in dem Medium M befindlichen Messwiderstands 6 bei einer definierten Temperatur TEMP1 des Mediums M gemessen und dieser Widerstandswert als Minimalwert R1 definiert, hierbei ist es insbesondere vorgesehen, dass das Medium M für den Analysebetrieb die vordefinierte Temperatur z.B. 25°C aufweist und ggf. vor der Messung auf diese Temperatur TEMP1 aufgeheizt oder gekühlte wird,
- anschließend wird an den Messwiderstand 6, welcher sich in dem ruhenden Medium M befindet, zu einem Zeitpunkt T1 eine definierte Heizleistung angelegt,
- dann wird begleitend bis zu einem Erreichen eines Maximalwertes der Widerstandswert R2 des Messwiderstands 6 bei einer maximalen Temperatur TEMP2 des Mediums M zu einem Zeitpunkt T2 gemessen und dann wird nach dem Erreichen bzw. Konstantbleiben dieses Maximalwertes die Heizleistung zu einem Zeitpunkt T3 abgeschaltet,
- als Einschwingzeit wird eine Zeitdifferenz Δt gemessen, welche nach dem Einschalten der Heizleistung und vor dem Abschalten der Heizleistung zwischen einem ersten Anstieg der Temperatur des Medium und einem letzten Anstieg der Temperatur liegt bzw. welche zwischen einem ersten Anstieg des Widerstandswerts und einem letzten Anstieg des Widerstandswerts liegt,
- abschließend wird aus dieser Einschwingzeit Δt die Zusammensetzung des Mediums M ermittelt, wobei dies insbesondere anhand eines Datensatzes erfolgt, welcher bezogen auf die angelegte Heizleistung und die vordefinierte Temperatur des Mediums M eine Zuordnung von Zusammensetzungen von Medien zu Einschwingzeiten umfasst.

Hierbei wird ein Ruhen des Mediums durch Schließen eines nicht dargestellten, im Heizkreis vorgelagerten oder eines nicht dargestellten, im Heizkreis nachgelagerten Ventils oder alternativ durch Abschalten einer im Heizkreis angeordneten, nicht dargestellten Pumpe erzeugt. Dieses Schließen oder Abschalten wird für die Messungen entweder manuell oder automatisch vorgenommen.

Zur Erhöhung der Genauigkeit der Messungen werden wiederholt, insbesondere periodisch weitere Einschwingzeiten gemessen und ein Mittelwert aus diesen Einschwingzeiten gebildet, anhand dessen dann die Zusammensetzung des Mediums ermittelt wird.

Es ist weiterhin vorgesehen, dass beschriebene Analyseverfahren derart zu ergänzen, dass als Zeitdifferenz diejenige Zeit bestimmt wird, welche zwischen einem minimalen Widerstandswert und einem maximalen Widerstandswert liegt.

In der Figur 2 sind die Messwerte für eine Zusammensetzung des Mediums angegeben, welche bei 100% Wasser liegt.

In Versuchen wurde für eine Medienzusammensetzung von 100% Wasser bei einer Heizleistung von 0,2 W eine mittlere Einschwingzeit von 7,92 Sekunden ermittelt, wobei eine Medientemperatur von 25°C vorlag.

In Versuchen wurde für eine Medienzusammensetzung von 50% Wasser und 50% Solarflüssigkeit bei einer Heizleistung von 0,2 W eine mittlere Einschwingzeit von 9,7 Sekunden ermittelt, wobei eine Medientemperatur von 25°C vorlag.

In Versuchen wurde für eine Medienzusammensetzung von 100% Solarflüssigkeit bei einer Heizleistung von 0,2 W eine mittlere Einschwingzeit von 11,75 Sekunden ermittelt, wobei eine Medientemperatur von 25°C vorlag.

Das Analyseverfahren wird grundsätzlich bei ruhendem Medium durchgeführt. Dies bedeutet, dass die Fließgeschwindigkeit des Mediums bei der Durchführung des Analyseverfahrens 0 m/s beträgt.

Sofern der Wärmemengenzähler in dem Messbetrieb zum Einsatz kommt, ist dieser am Anfang oder am Ende eines Heizkreises anzuordnen, damit die von dem Heizkreis abgegebene Wärmemenge unter Beachtung einer an jeweils anderen Ende des Heizkreises gemessenen Temperatur berechnet werden kann. Sofern der Wärmemengenzähler ausschließlich für den Analysebetrieb zum Einsatz kann dieser an einer beliebigen Stelle im Heizkreis positioniert werden.

Weiterhin ist in der Figur 1 mit gestrichelten Linien eine Ausführungsvariante des Wärmemengenzählers 1 dargestellt. In der Ausführungsvariante umfasst dieser noch einen weiteren Sensor 8, welcher als Temperatursensor 9 ausgebildet ist. Dieser Temperatursensor 9 ist entfernt von dem CTA-Sensor 5 in einem schematisch gezeigten Rohrsystem 10 angeordnet, welches an den Leitungsabschnitt 2 angeschlossen ist und diesem das Medium M zuführt. Mittels der durch den weiteren Sensor 8 gemessenen Temperatur kann von der Prozessoreinheit 3 oder auch von einer anderen, nicht dargestellten Prozessoreinheit eine Wärmemenge berechnet werden, welche von dem Rohrsystem 10, welches wahlweise wenigstens einen Heizkörper oder wenigstens einen Kühlkörper umfasst, abgegeben oder aufgenommen wird. Diese Wärmemenge kann besonders genau berechnet werden, sofern mit dem Wärmemengenzähler regelmäßig auch eine Zusammensetzung des Mediums ermittelt und hieraus dessen Wärmekapazität abgeleitet wird.

### Bezugszeichenliste:

- 1: Wärmemengenzähler
- 2: Leitungsabschnitt
- 2a: Innenraum von 2
- 3: Prozessoreinheit
- 4: Sensor
- 5: CTA-Sensor
- 6: Messwiderstand
- 7: Energieversorgungseinrichtung
- 8: weiterer Sensor
- 9: Temperatursensor
- 10: Rohrsystem
- M: Medium
- R1: erster Widerstandswert des Messwiderstands, Minimalwert
- R2: Maximalwert
- T1 - T3: Zeitpunkt
- TEMP1: minimale Temperatur des Mediums
- TEMP2: maximale Temperatur des Mediums
- Δt: Zeitdifferenz

## Patentansprüche

1. Verfahren zum Betrieb eines Wärmemengenzählers für ein Medium (M), wobei der Wärmemengenzähler (1) in einem Messbetrieb zur Messung einer Wärmemenge betrieben wird und, insbesondere abwechselnd, der Wärmemengenzähler (1) in einem Analysebetrieb zur Bestimmung einer Zusammensetzung des Mediums (M) betrieben wird, der Wärmemengenzähler (1) umfassend einen Leitungsabschnitt (2), eine Prozessoreinheit (3) und einen in einen Innenraum (2a) des Leitungsabschnitts (2) reichenden Sensor (4) und eine Energieversorgungseinrichtung, wobei mittels des Sensors (4) eine Temperatur des Mediums (M) und eine Strömungsgeschwindigkeit, mit welcher das Medium (M) den Leitungsabschnitt (2) durchströmt, messbar ist, wobei der Sensor (4) als CTA-Sensor (5) ausgebildet ist, welcher einen in dem Leitungsabschnitt (2) von dem Medium (M) umströmten Messwiderstand (6) umfasst, wobei der Messwiderstand (6) an die Energieversorgungseinrichtung (7) derart angeschlossen ist, dass der Messwiderstand (6) in einem Aufheizbetrieb von der Energieversorgungseinrichtung (7) versorgt ist, **dadurch gekennzeichnet, dass** im Analysebetrieb des Wärmemengenzählers (1) die nachfolgend genannten Schritte durchgeführt werden,
- wobei ein erster Widerstandswert (R1) des in dem Medium (M) befindlichen Messwiderstands (6) bei einer definierten Temperatur des Mediums (M) gemessen wird und dieser Widerstandswert als Minimalwert (R1) definiert wird,
- wobei anschließend an den Messwiderstand (6) eine definierte Heizleistung angelegt wird,
- wobei begleitend bis zu einem Erreichen eines Maximalwerts (R2) der Widerstandwert des Messwiderstands gemessen wird und danach die Heizleistung abgeschaltet wird,
- wobei als Einschwingzeit eine Zeitdifferenz (Δt) zwischen einem ersten Anstieg des Widerstandswerts des Messwiderstands (6) und einem letzten Anstieg des Widerstandswerts des Messwiderstands (6) ermittelt wird,
- wobei aus dieser Einschwingzeit die Zusammensetzung des Mediums (M) ermittelt wird, wobei dies anhand eines Datensatzes erfolgt, welcher bezogen auf die angelegte Heizleistung und die vordefinierte Temperatur des Mediums (M) eine Zuordnung von Zusammensetzungen von Medien zu Einschwingzeiten umfasst, und
- wobei das Verfahren bei ruhendem Medium durchgeführt wird.

2. Verfahren zum Betrieb eines Wärmemengenzählers nach Anspruch 1, **dadurch gekennzeichnet, dass** das Verfahren nach Anspruch 1 wiederholt durchgeführt wird und die Zusammensetzung des Mediums (M) (M) auf der Basis eines Mittelwerts der gemessenen Einschwingzeiten ermittelt wird.

3. Verfahren zum Betrieb eines Wärmemengenzählers (1) nach Anspruch 1, **dadurch gekennzeichnet, dass** in dem Messbetrieb (M) von dem CTA-Sensor (5) wiederholt sequentiell die Temperatur des Mediums (M) gemessen wird und die Strömungsgeschwindigkeit des Mediums (M) gemessen wird, mit welcher das Medium (M) den Leitungsabschnitt (2) durchströmt, und dass von dem weiterenSensor (8) wiederholt die Temperatur des Mediums (M) gemessen wird und aus den Messwerten die Wärmemenge errechnet wird, welche von dem zwischen dem ersten Sensor (4) und dem weiteren Sensor (8) angeordneten Rohrsystem (10) abgegebenen oder aufgenommenen wird.

4. Verfahren zum Betrieb eines Wärmemengenzählers (1) nach Anspruch 1, **dadurch gekennzeichnet, dass** in dem Messbetrieb (M) zur Ermittlung einer von dem Medium (M) transportierten Wärmemenge von dem CTA-Sensor (5) wiederholt sequentiell die Temperatur des Mediums (M) gemessen wird und die Strömungsgeschwindigkeit des Mediums (M) gemessen wird, mit welcher das Medium (M) den Leitungsabschnitt (2) durchströmt, und aus den Messwerten die transportierte Wärmemenge errechnet wird.

## Claims

1. Method for operating a heat meter for a medium (M), wherein the heat meter (1) is operated in a measuring mode for measuring a quantity of heat and, in particular alternately, the heat meter (1) is operated in an analysis mode for determining a composition of the medium (M), the heat meter (1) comprising a pipeline section (2), a processor unit (3) and a sensor (4) that reaches into an interior (2a) of the pipeline section (2), and an energy supply device, wherein the sensor (4) is able to measure a temperature of the medium (M) and a flow velocity at which the medium (M) is flowing through the pipeline section (2), wherein the sensor (4) is designed as a CTA sensor (5) which comprises a measuring resistor (6) around which the medium (M) flows in the pipeline section (2), wherein the measuring resistor (6) is connected to the energy supply device (7) in such a way that the measuring resistor (6) is supplied by the energy supply device (7) in a heating mode, **characterized in that** the steps mentioned below are carried out in the analysis mode of the heat meter (1),
- wherein a first resistance value (R1) of the measuring resistor (6) located in the medium (M) is measured at a defined temperature of the medium (M) and this resistance value is defined as minimum value (R1),
- wherein a defined heating power is subsequently applied to the measuring resistor (6),
- wherein the resistance value of the measuring resistor is simultaneously measured until a maximum value (R2) is reached and the heating power is then switched off,
- wherein a time difference (Δt) between a first increase in the resistance value of the measuring resistor (6) and a last increase in the resistance value of the measuring resistor (6) is ascertained as settling time,
- wherein the composition of the medium (M) is ascertained on the basis of this settling time, wherein this is done with the help of a data set which assigns compositions of media to settling times with regard to the applied heating power and the predefined temperature of the medium (M), and
- wherein the method is carried out when the medium is stationary.

2. Method for operating a heat meter according to Claim 1, **characterized in that** the method according to Claim 1 is carried out repeatedly and the composition of the medium (M) is ascertained on the basis of a mean value of the measured settling times.

3. Method for operating a heat meter (1) according to Claim 1, **characterized in that**, in the measuring mode (M), the CTA sensor (5) repeatedly sequentially measures the temperature of the medium (M) and measures the flow velocity of the medium (M) at which the medium (M) is flowing through the pipeline section (2), and **in that** the further sensor (8) repeatedly measures the temperature of the medium (M) and, on the basis of the measured values, calculates the quantity of heat given off or absorbed by the pipe system (10) arranged between the first sensor (4) and the further sensor (8).

4. Method for operating a heat meter (1) according to Claim 1, **characterized in that**, in the measuring mode (M), in order to ascertain a quantity of heat transported by the medium (M), the CTA sensor (5) repeatedly sequentially measures the temperature of the medium (M) and measures the flow velocity of the medium (M) at which the medium (M) is flowing through the pipeline section (2), and calculates the transported quantity of heat on the basis of the measured values.

## Revendications

1. Procédé de fonctionnement d'un calorimètre destiné à un milieu (M),
le calorimètre {1) étant utilisé dans un mode de mesure afin de mesurer une quantité de chaleur et, en particulier en alternance, le calorimètre (1) étant utilisé dans un mode d'analyse afin de déterminer une composition du milieu (M), le calorimètre (1) comprenant une portion de conduite (2), une unité de traitement (3) et un capteur (4), qui s'étend jusque dans un espace intérieur (2a) de la portion de conduite (2), et un dispositif d'alimentation en énergie,
une température du milieu (M) et une vitesse d'écoulement, à laquelle le milieu (M) s'écoule à travers la portion de conduite (2), pouvant être mesurées au moyen du capteur (4), le capteur (4) étant conçu comme un capteur CTA (5) qui comprend dans la portion de conduite (2) une résistance de mesure (6) autour de laquelle le fluide (M) s'écoule, la résistance de mesure (6) étant raccordée au dispositif d'alimentation en énergie (7) de manière à ce que la résistance de mesure (6) soit alimentée par le dispositif d'alimentation en énergie (7) dans un mode de chauffage, **caractérisé en ce que** les étapes mentionnées ci-dessous sont réalisées dans le mode d'analyse du calorimètre (1),
- une première valeur de résistance (Rl) de la résistance de mesure (6) située dans le milieu (M) est mesurée à une température définie du milieu (M) et cette valeur de résistance est définie comme étant la valeur minimale (R1),
- une puissance de chauffage définie est ensuite appliquée à la résistance de mesure (6),
- la valeur de résistance de la résistance de mesure est mesurée concomitamment jusqu'à ce qu'une valeur maximale (R2) soit atteinte et la puissance de chauffage est alors désactivée,
- une différence de temps (Δt) entre une première augmentation de la valeur de résistance de la résistance de mesure (6) et une dernière augmentation de la valeur de résistance de la résistance de mesure (6) est déterminée comme étant une période transitoire,
- la composition du milieu (M) est déterminée à partir de cette période transitoire, cela étant effectué sur la base d'un ensemble de données qui comprend une association de compositions de milieux à des périodes transitoires sur la base de la puissance de chauffage appliquée et la température prédéfinie du milieu (M), et
- le procédé est mis en oeuvre lorsque le milieu est au repos.

2. Procédé de fonctionnement d'un calorimètre selon la revendication 1, **caractérisé en ce que** le procédé selon la revendication 1 est mis en oeuvre à plusieurs reprises et la composition du milieu (M) est déterminée à partir d'une valeur moyenne des périodes transitoires mesurées.

3. Procédé de fonctionnement d'un calorimètre (1) selon la revendication 1, **caractérisé en ce que**, dans le mode de mesure (M), la température du milieu (M) est mesurée, et la vitesse d'écoulement du milieu (M), à laquelle le milieu (M) s'écoule à travers la portion de conduite (2), est mesurée séquentiellement à plusieurs reprises par le capteur CTA (5) et **en ce que** la température du milieu (M) est mesurée à plusieurs reprises par l'autre capteur (8) et la quantité de chaleur, qui est délivrée ou absorbée par le système de conduites (10) disposé entre le premier capteur (4) et l'autre capteur (8), est calculée à partir des valeurs de mesure.

4. Procédé de fonctionnement d'un calorimètre (1) selon la revendication 1, **caractérisé en ce que**, dans le mode de mesure (M), la température du milieu (M) est mesurée, et la vitesse d'écoulement du milieu (M), à laquelle le milieu (M) s'écoule à travers la portion de conduite (2), est mesuré, séquentiellement à plusieurs reprises par le capteur CTA (5) afin de déterminer une quantité de chaleur transportée par le milieu (M) et la quantité de chaleur transportée est calculée à partir des valeurs de mesure.
